# EUROPEAN PATENT SPECIFICATION

(11) **EP 1 958 516 B1**
(45) Date of publication and mention of the grant of the patent: **16.03.2011**
(21) Application number: 08150183.5
(22) Date of filing: 11.01.2008
(51) Int. Cl.: A23D 9/00, C10L 1/00, C10L 1/12

(54) **Method for treating bio-oil**
Verfahren zur Behandlung von Bio-Öl
Procédé pour le traitement de la bio-huile

(30) Priority: 11.01.2007 JP 2007003684; 02.04.2007 JP 2007096729; 20.12.2007 JP 2007328495
(43) Date of publication of application: 20.08.2008
(73) Proprietor: Nemoto Project Industry Co., Ltd., Yachiyo-shi, Chiba 2760047 (JP)
(72) Inventor: Nemoto, Isao c/o NEMOTO PROJECT INDUSTRY CO., LTD, Yachiyo-shi Shizuoka 276-0047 (JP); Kouno, Norio, Yachiyo-shi Chiba 276-0046 (JP); Sato, Eiichiro, Ichikawa-shi Chiba 272-0822 (JP); Sugiyama, Minoru, Atami-shi Shizuoka 413-0018 (JP)
(74) Representative: Henkel, Feiler & Hänzel

(56) References cited:
- WO-A-2007/128799
- US-A1- 2005 120 621

## Description

### BACKGROUND OF THE INVENTION

### 1. Field of the Invention

The present invention relates to a method for treating bio-oil collected from coconut husk produced during palm oil press, etc.

### 2. Description of the Related Art

Palm oil, which is used as a raw material for soap, glycerin, napalm bomb, etc., can be obtained from the fruits of "oil palm" growing in Malaysia, Indonesia, etc. Palm oil can also be used as rolling oil during the production steps of steel plates. On the other hand, coconut husk, which was conventionally disposed after palm oil press, is still rich in oil components. Noting this fact, production of new fuel oil from the coconut husk is attempted although the oil generates slightly lower calorie. For example, oil components are obtained by crushing coconut husk from which oil has been pressed out, vaporizing the oil components by contacting them with particles such as sands heated to high temperature, and condensing the gas using a water-cooling condenser. Besides coconut husk, cereal such as sugarcane, corn, etc. can be used as a raw material. Hereinafter the thus-obtained oil having low purity is referred to as "bio-oil". Organisms such as plants are sometimes considered to be an energy source and referred to as "biomass", and "bio-oil" is synonymous to "biomass oil".

The characteristics of bio-oil obtained from coconut husk raw material are compared to those of heavy oil A, heavy oil C and light oil, and are shown in Table 1.

**Table 1**

| | Heavy oil A | Heavy oil C | Light oil | Bio-oil |
|---|---|---|---|---|
| Reaction | neutral | neutral | neutral | acidic |
| Calorie [kJ/kg] | 45,200 | 44,000 | 46,000 | 16,190 |
| Water content [%] | 0.1 | 0.1 | 0.1 | 31.9 |

The calories of heavy oil A and heavy oil C are each approximately 45,000 kJ/kg, whereas that obtained from bio-oil is approximately 30% (16,190 kJ/kg). In this connection, the calorie originally generated by palm oil is 39,000 kJ/kg (not shown in Table 1).

As is apparent from Table 1, heavy oils and light oil contain little amount of water, whereas bio-oil contains approximately 30% of water. Furthermore, conventional heavy oil is neutral, whereas bio-oil is weak acidic and has a pH of 3.5. This is presumed to be due to acetic acid contained in the bio-oil by the amount of approximately 15%. Furthermore, significant lower calorie ofbio-oil than that of heavy oil can be considered to be due to water and acetic acid.

Such acidic bio-oil cannot be practically used for fuel in industry because it causes heavy corrosion of piping, reservoir tanks, etc. On the other hand, when conventional method of neutralization using calcium hydroxide or caustic soda is carried out, calorie of the bio-oil is further decreased and such bio-oil cannot be used as fuel.

W02007/128799, which represents prior art pursuant to Art. 54(3) EPC, concerns a polymeric material of photosynthetic origin comprising particulate inorganic material, which is particularly suitable for use in processes, whereby the polymeric material is converted to fuels in liquid or gas form, and/or to the valuable speciality chemicals. The polymeric material comprises biomass, in particular cellulose and at least one of hemicellulose and lignin.

### SUMMARY OF THE INVENTION

The present invention aims at adjusting the pH value of acidic bio-oil to around neutral without decreasing calorie, whereby allowing practical use of bio-oil as fuel oil, and effectively utilizing reaction heat and reaction gas generated during the treatment.

The present invention is directed to a method for treating bio-oil, the method comprising: adding magnesium or a magnesium alloy to a neat solution of bio-oil, or purifying the neat solution of bio-oil while adding magnesium or a magnesium alloy; and thoroughly stirring the mixture so as to adjust pH value to around neutral. More desirably, the present invention is directed to a method for treating bio-oil further comprising: adding a predetermined amount of alcohol besides the magnesium or magnesium alloy; and thoroughly stirring the mixture.

According to the present invention, superior effects that the pH value of acidic bio-oil is adjusted to around neutral and the calorie is increased, whereby practicable fuel oil can be obtained and resource can be effectively utilized, and that reaction gas and reaction heat generated during the treatment can also be utilized, can be exhibited.

### BRIEF DESCRIPTION OF THE DRAWING

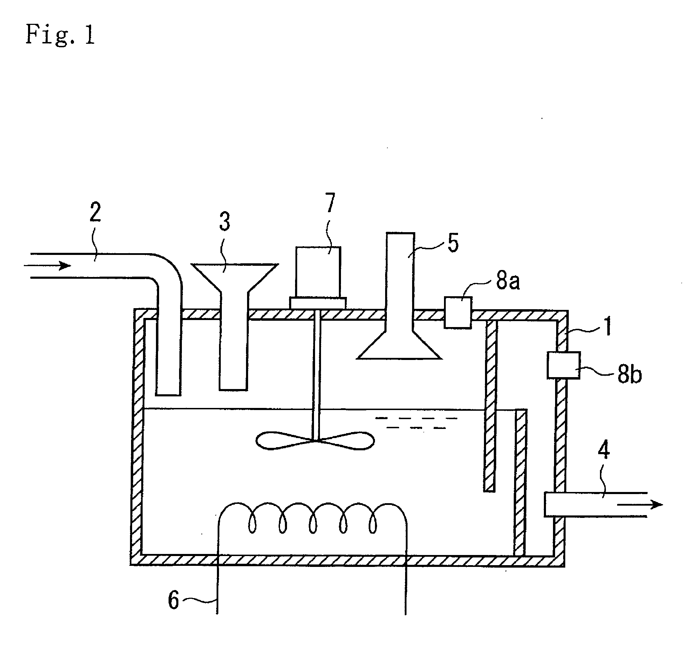

Fig. 1 is a schematic drawing of a reaction bath according to the embodiment of the present invention.

### DESCRIPTION OF THE PREFERRED EMBODIMENT

The method for treating neat liquid of bio-oil according to the present invention is explained with referring to drawings.

Fig. 1 is a schematic drawing of a treatment bath for explaining the treatment to be carried out, in which I represents a treatment bath, 2 represents an inlet tube to which the neat liquid flows in, 3 represents an input chute for a treating agent of magnesium or a magnesium alloy, 4 represents an outlet tube (outlet) for treated oil, 5 represents a suction duct for generated gas, 6 represents a heat exchanger, 7 represents a stirrer, and 8a and 8b are safety valves.

A treatment agent is input from the input chute 3 to the neat bio-oil flowing from the inlet tube 2 to the treatment bath I, and the mixture is sufficiently stirred in the stirrer 7. The treatment agent is magnesium or magnesium alloy that is practically used (e.g., aluminum alloy, zinc alloy, etc.), and is preferably in the form of powder so as to increase surface area per weight and accelerate the reaction. The amount of magnesium to be input is sufficient at several grams per 100 ml of neat oil. Magnesium vigorously reacts with acetic acid and generates heat and hydrogen gas. Namely, the following reaction proceeds:

Acetic acid + magnesium → hydrogen + heat

The main reaction is represented by the following chemical equation:

2CH₃COOH + Mg → H₂ + (CH₃COO)₂Mg + x (1)

wherein x represents reaction calorie (kcal/mol). The hydrogen gas generated can be collected and effectively used. Furthermore, by providing the heat exchanger 6 in the liquid surface of the reaction bath 1, reaction heat can be taken via a heat medium that is circulating, and utilized.

Although the treatment may be sufficiently continued until the treating agent is completely dissolved, it is the most desirable to determine the endpoint of the treatment by monitoring the pH value. The approximate endpoint of the reaction is neutral, but it may be slightly basic so as to accelerate the reaction of the residue.

The hydrogen gas generated by the reaction is aspirated from the suction duct 5. It is desirable to provide safety valves 8a and 8b at suitable positions since when the aspiration is stopped due to breakdown, etc., the pressure of hydrogen in the device increases, which may lead to explosion.

The treated bio-oil is taken from the outlet tube 4. Since the acidic bio-oil is neutralized and the water content in the bio-oil is decreased at the same time, fuel oil that does not injure facilities such as piping, reservoir tanks, etc. and that generates high calorie can be obtained.

Furthermore, during the step for purifying bio-oil neat liquid from coconut husk raw material, the pH value can be adjusted to a desired value by adding magnesium or a magnesium alloy to a stirring bath in which crushed coconut husk is contacted with particles such as sand heated to high temperature.

It is preferable to add a predetermined amount of alcohol besides magnesium or a magnesium alloy.

There are two significances of adding alcohol. Firstly, when an oxide generated by addition of magnesium precipitates in the form of mass, the mass can be decomposed by addition of alcohol, whereby the mass becomes powdery and its flowability is increased. To achieve this object, any kind of alcohol may be used, and the effect can be observed by addition of alcohol of approximately 3% or more relative to neat liquid.

Secondly, calorie of fuel increases in proportion to the amount of alcohol added. In this case, since the more the calorie increases the more alcohol is added, the amount of alcohol to be added can be determined according to the intended use. The calorie as high as that of the light oil for diesel engine shown in Table 1 can be readily realized by the present invention. Furthermore, alcohol having large carbon number, so-called higher alcohol, is not necessarily effective for the present invention. Therefore, methanol or ethanol, which is inexpensive and readily available, is the most suitable in view of economic efficiency, etc.

## Claims

1. A method for treating bio-oil, the method comprising:
adding magnesium or a magnesium alloy to a neat solution of bio-oil, or purifying the neat solution of bio-oil while adding magnesium or a magnesium alloy; and
thoroughly stirring the mixture so as to adjust pH value to around neutral.

2. The method for treating bio-oil according to claim 1, wherein the magnesium, or magnesium alloy is in the form of powder.

3. The method for treating bio-oil according to claim 1 or 2, further comprising:
adding a predetermined amount of alcohol besides the magnesium or magnesium alloy; and
thoroughly stirring the mixture.

4. The method for treating bio-oil according to claim 3, wherein the alcohol to be added is methanol or ethanol.

## Patentansprüche

1. Verfahren zur Behandlung von Bioöl, wobei das Verfahren
die Zugabe von Magnesium oder einer Magnesiumlegierung zu einer puren Bioöllösung oder die Reinigung der puren Bioöllösung unter Zugabe von Magnesium oder einer Magnesiumlegierung und
das sorgfältige Rühren des Gemischs, um den pH-Wert auf etwa neutral einzustellen, umfasst.

2. Verfahren zur Behandlung von Bioöl nach Anspruch 1, wobei das Magnesium oder die Magnesiumlegierung in der Form eines Pulvers ist.

3. Verfahren zur Behandlung von Bioöl nach Anspruch 1 oder 2, das ferner
die Zugabe einer vorgegebenen Alkoholmenge außer Magnesium oder der Magnesiumlegierung und
sorgfältiges Rühren des Gemischs umfasst.

4. Verfahren zur Behandlung von Bioöl nach Anspruch 3, wobei der zuzugebende Alkohol Methanol oder Ethanol ist.

## Revendications

1. Procédé pour traiter une bio-huile, le procédé comprenant :
l'addition de magnésium ou d'un alliage de magnésium à une solution non diluée de bio-huile, ou la purification de la solution non diluée de bio-huile tout en ajoutant du magnésium ou un alliage de magnésium ; et
le mélange parfait du mélange de façon à ajuster la valeur de pH autour de la neutralité.

2. Procédé pour traiter une bio-huile selon la revendication 1, dans lequel le magnésium ou l'alliage de magnésium est sous la forme d'une poudre.

3. Procédé pour traiter une bio-huile selon la revendication 1 ou 2, comprenant en outre :
l'addition d'une quantité prédéterminée d'alcool en plus du magnésium ou de l'alliage de magnésium ; et
le mélange parfait du mélange.

4. Procédé pour traiter une bio-huile selon la revendication 3, dans lequel l'alcool devant être ajouté est le méthanol ou l'éthanol.
